# DEMANDE DE BREVET EUROPEEN

(11) **EP 1 548 861 A1**
(43) Date de publication de la demande: **29.06.2005**
(21) Numéro de dépôt: 04293011.5
(22) Date de dépôt: 16.12.2004
(51) Int. Cl.: H01M 4/48, H01M 4/58, H01M 10/40, C01B 25/45

(54) **Matière électrochimiquement active pour électrode positive de générateur électrochimique rechargeable au lithium**

(30) Priorité: 23.12.2003 FR 0315225
(71) Demandeur: SAFT, 93170 Bagnolet (FR)
(72) Inventeur: Jordy, Christian, 33440 St Louis de Montferrand (FR); Boeuve, Jean-Pierre, 33450 Montussan (FR); Biensan, Philippe, 33360 Carignan (FR)
(74) Mandataire: Cabinet Hirsch

(57) **Abrégé**

La présente invention a pour objet un générateur électrochimique rechargeable au lithium contenant un électrolyte liquide et une matière électrochimiquement active pour électrode positive caractérisé en ce que ladite matière active comprend un mélange de :
(I) un oxyde mixte de lithium et d'au moins un métal de transition choisi parmi Ni et Co, qui est substitué en outre par un élément choisi parmi Mg, Al, B, Ti, Si, Zr, Fe, Zn et Cu.
(II) un oxyde mixte de phosphore, de lithium, et d'au moins un métal de transition de formule générale Liₜ M²_{z} PO₄ où 0 ≤ t ≤ 3 et z = 1 ou 2 et telle que la proportion de l'oxyde mixte de phosphore, de lithium, et d'au moins un métal de transition est comprise entre 1 et 50 % du poids dudit mélange.

## Description

La présente invention se rapporte à une matière électrochimiquement active destinée à être utilisée dans l'électrode positive d'un générateur électrochimique rechargeable au lithium. Bien entendu l'invention concerne aussi l'électrode positive contenant une telle matière active et le générateur au lithium comprenant cette électrode.

Les oxydes lithiés de métaux de transition sont connus comme matière active cathodique utilisable dans les générateurs rechargeables au lithium. Dans l'électrode positive ou cathode, on utilise le plus souvent comme matière active des oxydes lithiés de métaux de transition de formule générale Liₓ M_{y} O_{f}, où M est le plus souvent Mn, Ni ou Co, et leurs dérivés substitués. Ces matières actives permettent d'obtenir des performances élevées, notamment en terme de capacité réversible en cyclage et de durée de vie. Les matières actives constituant l'électrode positive des générateurs utilisés actuellement ont une stabilité thermique qui satisfait un certain nombre de tests réalisés dans des conditions dites abusives, telles que le test au clou et le court circuit externe. Cependant, au test simulant un dysfonctionnement du système de charge, qui consiste à surcharger le générateur à un régime de Ic (où Ic est le courant nécessaire théorique pour décharger le générateur en une heure) des réactions violentes ont lieu, en particulier l'émission de flammes.

Par ailleurs d'autres types de matières actives d'un coût moindre ont été étudiées parmi lesquelles les phosphates lithiés de métaux de transition, notamment les composés basés sur LiFePO₄. Cependant l'utilisation de ces composés se heurte à leur faible capacité, leur faible conductivité électronique, et au fait que LiFePO₄ et FePO₄ sont de mauvais conducteurs ioniques. Il est donc nécessaire d'ajouter dans l'électrode une forte proportion d'un matériau conducteur, ce qui pénalise ses performances, notamment ses caractéristiques en cyclage. Les études en vue de palier cet inconvénient se sont attachées à perfectionner la méthode de synthèse de ces composés.

La présente invention a pour but de proposer une matière électrochimiquement active pour l'électrode positive d'un générateur électrochimique rechargeable au lithium permettant d'éviter la formation de flammes lors d'essais abusifs en surcharge du générateur.

L'objet de la présente invention est un générateur électrochimique rechargeable au lithium contenant un électrolyte liquide et une matière électrochimiquement active pour électrode positive caractérisé en ce que ladite matière active comprend un mélange de :
(I) un oxyde mixte de lithium et d'au moins un métal de transition choisi parmi Ni et Co, qui est substitué en outre par un élément choisi parmi Mg, Al, B, Ti, Si, Zr, Fe, Zn et Cu.
(Il) un oxyde mixte de phosphore, de lithium, et d'au moins un métal de transition de formule générale Lit M²_{z} PO₄ où 0 ≤ t ≤ 3 et z = 1 ou 2 et telle que la proportion de l'oxyde mixte de phosphore, de lithium, et d'au moins un métal de transition est comprise entre 1 et 50% du poids dudit mélange.

Les générateurs comportant une électrode positive à base d'une matière active de type oxydes lithiés de métal de transition substitué, réagissent violemment lors de la surcharge en raison d'une quantité de gaz générée très importante associée à des température de gaz élevées. Lors d'essais abusifs en surcharge, ce gaz se dégage très rapidement et, à la température à laquelle sort le gaz, il se produit au contact de l'atmosphère une auto-inflammation du gaz, d'où la présence de flammes.
Les matières actives à base de phosphates sont connues pour réagir faiblement dans les conditions de surcharge. Cependant leur capacité spécifique réduite, leur très faible conductivité, leur basse tension de fonctionnement rendent ces matériaux peu intéressants.
La nouvelle solution technique, que l'on préconise selon l'invention pour résoudre les difficultés de l'art antérieur et les inconvénients précités, repose sur l'utilisation d'un mélange d'une matière active à forte capacité réversible avec une matière active à base de phosphate qui présente une faible conductivité.
En réalisant un mélange de ces matériaux, le demandeur s'attendait à réduire la température maximum atteinte par le générateur électrochimique lors de l'emballement thermique en surcharge. Cet effet n'a pas été observé. Par contre, le demandeur a découvert un phénomène surprenant qui consiste en une génération de gaz inflammables très inférieure à celle qui était normalement attendue. De plus, une résistance interne de l'accumulateur très inférieure à celle attendue a été observée.

De préférence, la proportion de l'oxyde mixte de phosphore, de lithium, et d'au moins un métal de transition est comprise entre 1 et 30% du poids dudit mélange, et de préférence encore, la proportion de l'oxyde mixte de phosphore, de lithium, et d'au moins un métal de transition est comprise entre 5 et 30 % du poids dudit mélange.

De préférence M² est au moins un élément choisi parmi Fe, Ni, Co, Mn et V. Et de préférence encore M² est Fe.
Selon une variante, M² est substitué par un élément choisi parmi Mg, Al, B, Ti, Si, Zr, Fe, Zn et Cu.
De préférence ledit oxyde mixte de phosphore, de lithium, et d'un métal de transition est choisi de préférence parmi LiFePO₄, LiVPO₄F, et Li₃Fe₂PO₄. L'oxyde mixte de phosphore, de lithium, et d'un métal de transition peut être éventuellement au moins partiellement substitués par un autre élément.

La présente invention décrit aussi une électrode positive de générateur électrochimique rechargeable au lithium contenant la matière active décrite précédemment. L'électrode est constituée d'un support conducteur servant de collecteur de courant qui est revêtu d'une couche contenant la matière électrochimiquement active selon l'invention et comprenant en outre un liant et un matériau conducteur.
Le collecteur de courant est de préférence un support conducteur bidimensionnel, comme un feuillard plein ou perforé, à base de carbone ou de métal, par exemple en cuivre, aluminium, nickel, acier, inox ou aluminium. De préférence une électrode positive comporte un collecteur en aluminium. En cas de surdécharge ou d'inversion de l'accumulateur, on évite ainsi la mise en court-circuit par dendrites de cuivre lorsque le collecteur est en cuivre.

Le liant peut contenir un ou plusieurs des composants suivants : le polyfluorure de vinylidène (PVdF) et ses copolymères, le polytétrafluoroéthylène (PTFE), le polyacrylonitrile (PAN), le polyméthacrylate de méthyle ou de butyle, le polychlorure de vinyle (PVC), le polyvinylformal, les polyesters et les polyéthers blocs amides, les polymères de l'acide acrylique, l'acide méthacrylique, l'acrylamide, l'acide itaconique, l'acide sulfonique, les élastomères et les composés cellulosiques.
Parmi les élastomères utilisables, on peut citer les terpolymères éthylène / propylène / diène (EPDM), les copolymères styrène / butadiène (SBR), les copolymères acrylonitrile / butadiène (NBR), les copolymères bloc styrène / butadiène / styrène (SBS) ou styrène / acrylonitrile / styrène (SIS), les copolymères styrène / éthylène / butylène / styrène (SEBS), les terpolymères styrène / butadiène / vinylpyridine (SBVR), les polyuréthanes (PU), les néoprènes, les polyisobutylènes (PIB), les caoutchoucs butyle, etc... et les mélanges de ceux-ci.
Le composé cellulosique peut être une carboxyméthylcellulose (CMC), une hydroxypropylméthylcellulose (HPMC), une hydroxypropylcellulose (HPC) ou une hydroxyéthylcellulose (HEC).
Le matériau conducteur est choisi parmi du graphite, du noir de carbone, du noir d'acétylène (AB), de la suie ou l'un de leurs mélanges.

La présente invention a encore pour objet un générateur électrochimique rechargeable au lithium comprenant une électrode positive contenant une matière active telle que décrite précédemment. Le générateur selon l'invention comprend en outre une électrode négative, un séparateur et un électrolyte liquide.
L'électrode négative est constituée d'un support conducteur servant de collecteur de courant qui est revêtu d'une couche contenant la matière électrochimiquement active et comprenant en outre un liant et un matériau conducteur. L'électrode négative comporte un collecteur en cuivre ou en nickel ; avantageusement le collecteur négatif est en cuivre. La matière électrochimiquement active choisie parmi le lithium métallique, les alliages de lithium, un matériau carboné susceptible d'insérer du lithium dans sa structure comme le graphite, le coke, le noir de carbone et le carbone vitreux, et un oxyde mixte de lithium et d'un métal de transition tel que le nickel, le cobalt ou le titane.
L'électrolyte est un électrolyte liquide non-aqueux comportant un sel de lithium dissous dans un solvant.
Le sel de lithium est choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂ (LiTFSI), le trifluorométhanesulfoneméthide de lithium LiC(CF₃SO₂)₃ (LiTFSM), le bisperfluoroéthylsulfonimide de lithium LiN(C₂F₅SO₂)₂ (BETI) et les mélanges des précédents.
De préférence le solvant est un solvant ou un mélange de solvants choisi parmi les solvants organiques usuels notamment les carbonates cycliques saturés, les carbonates cycliques insaturés, les carbonates non-cycliques, les esters d'alkyle, comme les formiates, les acétates, les propionates ou les butyrates, les éthers, les lactones comme la γ-butyrolactone, le bioxyde de tétrahydrothiofène (commercialisé sous la marque "SULFOLANE"), les solvants nitriles, et les mélanges de ceux-ci. Parmi les carbonates cycliques saturés, on peut citer par exemple le carbonate d'éthylène (EC), le carbonate de propylène (PC), le carbonate de butylène (BC), et les mélanges de ceux-ci. Parmi les carbonates cycliques insaturés, on peut citer par exemple le carbonate de vinylène (VC), ses dérivés et les mélanges de ceux-ci. Parmi les carbonates non-cycliques, on peut citer par exemple le carbonate de diméthyle (DMC), le carbonate de diéthyle (DEC), le carbonate de méthyle éthyle (EMC), le carbonate de dipropyle (DPC) et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle et les mélanges de ceux-ci. Parmi les éthers, on peut citer par exemple l'éther de diméthyle (DME) ou de diéthyle (DEE), et les mélanges de ceux-ci. On peut encore citer le 1,2-diméthoxyéthane, le 1,2-diéthoxyethane, le 2-méthyl tétrahydrofurane, et le 3-méthyl-1,3-dioxolane

D'autres caractéristiques et avantages de la présente invention apparaîtront au cours des exemples suivants de réalisation, donnés bien entendu à titre illustratif et non limitatif, et dans le dessin annexé sur lequel
- la figure 1 est une coupe schématique d'un générateur électrochimique de format bouton,
- la figure 2 représente les courbes de charge et de décharge à Ic/20 d'un générateur électrochimique dont l'électrode positive contient une matière active de l'art antérieur, la tension du générateur en volts est donné en ordonnée, et en abscisse la capacité en mAh/g,
- la figure 3, analogue à la figure 2, représente les courbes de charge et de décharge à Ic/20 d'un générateur électrochimique dont l'électrode positive contient une matière active selon l'invention,
- la figure 4 est une coupe schématique d'un générateur électrochimique de format cylindrique à électrodes spiralées.

### Préparation d'une électrode

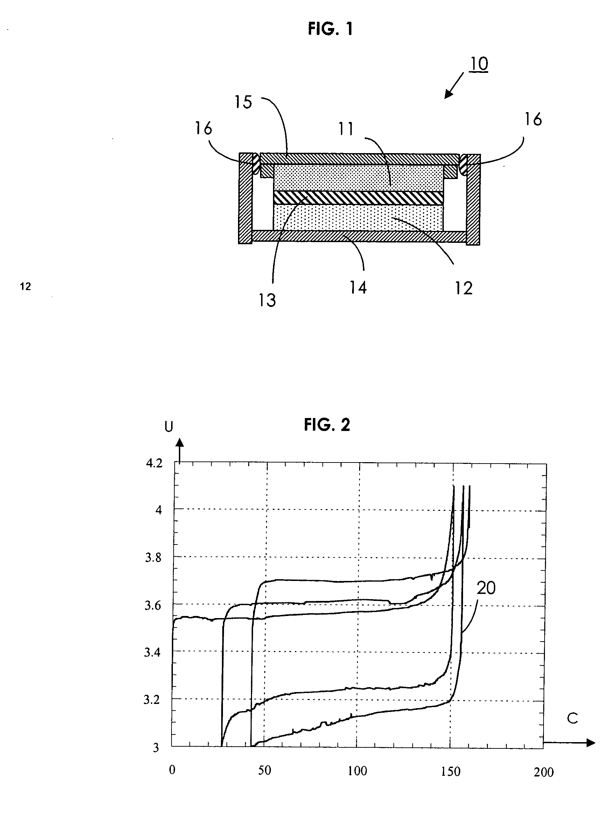

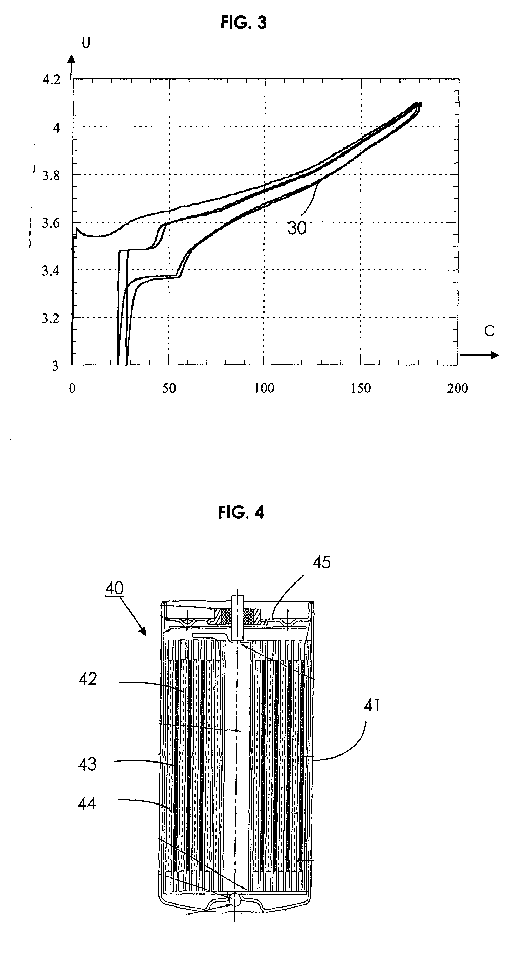

On réalise une électrode positive de la manière suivante. Une pâte est préparée en mélangeant 86% en poids de la matière électrochimiquement active, 6% en poids d'un liant, de préférence du polyfluorure de vinylidène (PVdF), et 8% en poids d'un matériau conducteur carboné, de préférence un mélange composé de 4% de suie et 4% de graphite. La viscosité de la pâte est ajustée avec de la N-méthylpyrolidone (NMP). La pâte ainsi obtenue est déposée sur un feuillard d'aluminium qui sert de support conducteur à l'électrode. L'électrode est alors séchée à 140°C pendant 1 h, puis calandrée.
L'électrode précédemment préparée est utilisée pour réaliser deux types de générateur :
- un générateur électrochimique rechargeable de format bouton (figure 1), comprenant une électrode négative en lithium métallique, destiné à évaluer la capacité électrochimique de la matière active de l'électrode positive,
- un générateur électrochimique rechargeable cylindrique de format 4/5A (figure 4), comprenant une électrode négative constituée principalement de graphite, afin de caractériser le comportement thermique en test abusif de surcharge du générateur.

### Evaluation de la capacité électrochimique

Un générateur électrochimique 10 de format bouton est représenté sur la figure 1. Il comprend une électrode positive 11 face à une électrode négative 12 constituée d'une feuille de lithium métallique. Les électrodes positive 11 et négative 12 encadrent un séparateur 13 constitué d'une membrane de polyéthylène (PE) commercialisée par la société "CELANESE" sous la dénomination "CELGARD". Le couple électrochimique ainsi obtenu est disposé dans une coupelle 14 fermée de manière étanche par un couvercle 15 par l'intermédiaire d'un joint 16. Le couple électrochimique est imprégné d'un électrolyte qui est un mélange de carbonate de propylène, de carbonate d'éthylène et de carbonate de diméthyle PC/EC/DMC dans les proportions volumiques 1/1/3, et contenant un sel de lithium qui est l'hexafluorophosphate de lithium LiPF₆ à la concentration 1 M. L'assemblage du générateur et son remplissage en électrolyte sont effectués en boîte à gants sous atmosphère d'argon exempte d'humidité.

Les capacités réversibles de matières actives faisant partie de l'invention et de matières actives de l'art antérieur ont été mesurées en générateur de format bouton à un régime de Ic/20, où Ic est le courant nécessaire théorique pour décharger le générateur en une heure.
La figure 2 représente une courbe 20 de trois charges et de deux décharges successives à Ic/20 d'un générateur électrochimique dont l'électrode positive contient une matière active LiFePO₄ de l'art antérieur. De la même manière la figure 3 représente une courbe 30 de trois charges et de deux décharges successives à Ic/20 d'un générateur électrochimique dont l'électrode positive contient une matière active 80% LiNi_{0.80}CO_{0.15}Al_{0.05}O₂+20% LiFePO₄ selon l'invention.
Les résultats obtenus sont rassemblés dans le tableau 1 ci-dessous.

**TABLEAU 1**

| Matière active | Capacité réversible à Ic/20 (mAh/g) | Capacité réversible à Ic/10 (mAh/g) | Polarisation (différence de tension entre la charge et la décharge à Ic/20) |
|---|---|---|---|
| 100% LiFePO₄ (art antérieur) | 125 | 25 | 350 à 550 mV |
| 100% LiNi_{0.80}CO_{0.15}Al₀.₀₅O₂ (art antérieur) | 160 | 160 | <20 mV <20 mV |
| 80% LiNi_{0.80}Co_{0.15}Al_{0.05}O₂ + 20% LiFePO₄ (invention) | 155 | 155 | <120 mV |

Une polarisation (différence de tension entre la charge et la décharge) très élevée (correspondant à une résistance interne très élevée) est observée sur l'oxyde mixte de phosphore et de fer LiFePO₄ (> 350 mV), ce qui entraîne une perte extrêmement élevée de la capacité réversible, notamment à un régime de Ic/10. Au contraire, sur le matériau d'oxyde mixte de lithium et de métaux de transition LiNi_{0.80}Co_{0.15}Al_{0.05}O₂, la capacité réversible ne varie pas selon le régime.
Compte tenu des résultats qui précèdent, la capacité attendue pour le matériau de l'invention à un régime de Ic/10 serait de 130 mAh/g. Or la valeur mesurée effectivement est bien supérieure : elle est de 155 mAh/g.

### Comportement thermique en test abusif de surcharge

On évalue la résistance à la surcharge d'un générateur rechargeable au lithium comprenant une électrode positive contenant une matière active selon l'invention composée d'un mélange de 80% en poids d'un oxyde mixte de lithium, de nickel et de cobalt substitué à l'aluminium LiNi_{0.80}Co_{0.15}Al_{0.05}O₂, et de 20% en poids d'un oxyde mixte de phosphore, de lithium et de fer LiFePO₄. On évalue comparativement la résistance à la surcharge d'un générateur rechargeable au lithium comprenant une électrode positive contenant une matière active selon l'art antérieur.

La figure 4 représente en coupe un générateur cylindrique 40 comprenant dans un conteneur 41 un faisceau électrochimique spiralé composé d'une électrode positive 42 et d'une électrode négative 43 entourant un séparateur 44. L'électrode négative est constituée d'une couche active contenant du graphite comme matière active et un liant, constitué de 2% de SBR et 2% de CMC, déposée sur un feuillard de cuivre. L'électrode négative a été conçue de telle manière que le ratio de la capacité de l'électrode négative par rapport à la capacité de l'électrode positive soit d'environ 1:3. Une fois le faisceau électrochimique et l'électrolyte introduit dans le conteneur 41, le générateur est fermé de manière hermétique par un couvercle 45.

Le générateur électrochimique cylindrique de format 4/5A est placé dans une enceinte étanche de volume calibré (1litre) équipée d'un capteur de pression. Les tests de surcharge sont réalisés sous atmosphère neutre (argon ou azote) après avoir préalablement chargé le générateur. Le régime de surcharge utilisé est de 21c. Après environ 30 minutes de surcharge, l'emballement thermique de l'accumulateur est observé.
Les résultats obtenus pour une matière active selon l'invention et une matière active de l'art antérieur sont rassemblés dans le tableau 2 ci-dessous. En raison de la très forte impédance de la matière active de l'art antérieur LiFePO₄, il n'a pas été possible de réaliser la surcharge.

**TABLEAU 2**

| Matière active | Quantité de gaz générée (bar.I) |
|---|---|
| 100% LiNi_{0.80}Co_{0.15}Al_{0.05}O₂ (art antérieur) | ₄ |
| 80% LiNi_{0.80}CO_{0.15}Al_{0.05}O₂ + 20% LiFePO₄ (invention) | 2.4 |

L'utilisation d'une matière active selon l'invention dans un générateur au lithium a permis de diviser quasiment par 2 la quantité totale de gaz dégagé par rapport à un générateur de l'art antérieur. Par ailleurs l'énergie mesurée sur ces générateurs reste très élevée. Ces caractéristiques rendent les générateurs électrochimiques contenant la matière active de l'invention particulièrement intéressants notamment d'un point de vue performance et sécurité.

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on pourra sans sortir du cadre de l'invention envisager l'utilisation d'un support conducteur d'électrode de nature et de structure différente. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés.

## Revendications

1. Générateur électrochimique rechargeable au lithium contenant un électrolyte liquide et une matière électrochimiquement active pour électrode positive **caractérisé en ce que** ladite matière active comprend un mélange de :
(I) un oxyde mixte de lithium et d'au moins un métal de transition choisi parmi Ni et Co, qui est substitué en outre par un élément choisi parmi Mg, Al, B, Ti, Si, Zr, Fe, Zn et Cu.
(II) un oxyde mixte de phosphore, de lithium, et d'au moins un métal de transition de formule générale Lit M²_{z} PO₄ où 0 ≤ t ≤ 3 et z = 1 ou 2 et telle que la proportion de l'oxyde mixte de phosphore, de lithium, et d'au moins un métal de transition est comprise entre 1 et 50 % du poids dudit mélange.

2. Générateur selon la revendication 1, dans lequel la proportion de l'oxyde mixte de phosphore, de lithium, et d'au moins un métal de transition est comprise entre 1 et 30 % du poids dudit mélange.

3. Générateur selon la revendication 1, dans lequel la proportion de l'oxyde mixte de phosphore, de lithium, et d'au moins un métal de transition est comprise entre 5 et 30 % du poids dudit mélange.

4. Générateur selon l'une des revendications précédentes, dans lequel le métal de transition de l'oxyde mixte de lithium est substitué par Al.

5. Générateur selon la revendication 4, dans lequel l'oxyde mixte de lithium et d'au moins un métal de transition a pour formule LiNi_{0,80}CO_{0,15}Al_{0,05}O₂.

6. Générateur selon l'une des revendications précédentes, dans lequel M² est au moins un élément choisi parmi Fe, Ni, Co, Mn et V.

7. Générateur selon la revendication 6, dans lequel M² est Fe.

8. Générateur selon l'une des revendications précédentes, dans lequel M² est substitué par un élément choisi parmi Mg, Al, B, Ti, Si, Zr, Fe, Zn et Cu.

9. Générateur selon l'une des revendications précédentes, dans lequel ledit oxyde mixte de phosphore, de lithium, et d'un métal de transition est choisi de préférence parmi LiFePO₄, LiVPO₄F, et Li₃Fe₂PO₄ et peut être au moins partiellement substitué.

10. Générateur selon l'une des revendications précédentes, dans lequel l'électrode positive comprend en outre un liant et un matériau conducteur.

11. Générateur selon la revendication 10, comprenant en outre une électrode négative et un séparateur.

12. Générateur selon l'une des revendications précédentes, dans lequel ladite électrode négative contient une matière électrochimiquement active choisie parmi le lithium métallique, les alliages de lithium, un matériau carboné susceptible d'insérer du lithium dans sa structure et un oxyde mixte de lithium et d'un métal de transition.

13. Générateur selon la revendication 12, dans lequel ledit matériau carboné est choisi parmi le graphite, le coke, le noir de carbone et le carbone vitreux.

14. Générateur selon l'une des revendications 1 à 13, dans lequel ledit électrolyte est choisi parmi un électrolyte liquide non-aqueux comportant un sel de lithium dissous dans un solvant.
